# EUROPÄISCHE PATENTSCHRIFT

(11) **EP 2 408 634 B1**
(45) Veröffentlichungstag und Bekanntmachung des Hinweises auf die Patenterteilung: **19.03.2014**
(21) Anmeldenummer: 10707219.1
(22) Anmeldetag: 27.02.2010
(51) Int. Cl.: B60K 15/03

(54) **KUNSTSTOFF-KRAFTSTOFFBEHÄLTER**
PLASTIC FUEL TANK
RÉSERVOIR DE CARBURANT EN PLASTIQUE

(30) Priorität: 19.03.2009 DE 102009013514
(43) Veröffentlichungstag der Anmeldung: 25.01.2012
(73) Patentinhaber: Kautex Textron GmbH & Co. KG, 53229 Bonn (DE)
(72) Erfinder: GEBERT, Klaus, 47877 Willich (DE); WAGNER, Axel, 53227 Bonn (DE)
(74) Vertreter: polypatent
(86) Internationale Anmeldenummer: PCT/EP2010/001230
(87) Internationale Veröffentlichungsnummer: WO 2010/105734

(56) Entgegenhaltungen:
- DE-B3-102007 026 817
- DE-U1- 20 110 549
- US-A- 5 129 544
- US-A1- 2006 032 538

## Beschreibung

Die Erfindung betrifft einen Kunststoff-Kraftstoffbehälter für Kraftfahrzeuge, mit wenigstens einer wenigstens ein Kraftstoffvolumen umschließenden Behälterwandung.

Solche Kunststoff-Kraftstoffbehälter haben sich für den Einsatz in Kraftfahrzeugen besonders bewährt, da diese herstellungsbedingt komplexe Konturen und mehrere miteinander kommunzierende Tankvolumina aufweisen können, insbesondere können solche Kunststoff-Kraftstoffbehälter optimal an die in einem Kfz vorhandene Einbausituation angepasst werden.

Bei Kraftfahrzeugen, die mit Diesel oder Ottomotor betrieben werden, werden Kraftstofftanksysteme üblicherweise drucklos betrieben, d. h. ein Druckausgleich mit der Atmosphäre findet über wenigstens ein Kraftstoffdampffilter statt, welches über eine Betriebsentlüftungseinrichtung mit dem Behältervolumen kommuniziert. Die üblicherweise verwendeten Kraftstoffdampffilter sind als Aktivkohlefilter ausgebildet. Diese werden beispielsweise während des Stillstands des Kfz oder auch während der Betankung mit gasförmigen Kohlenwasserstoffen beladen, wohingegen diese bei Betrieb der Brennkraftmaschine durch Rückspülen mittels vom Motor angesaugter Verbrennungsluft entladen werden. Es ist nachvollziehbar, dass die adsorptive Kapazität eines Kraftstoffdampffilters nicht zuletzt durch dessen Größe bestimmt wird. Bei Kraftfahrzeugen, die sowohl elektromotorisch als auch mittels Verbrennungsmotor angetrieben werden, ist eine Rückspülung des Kraftstoffdampffilters naturgemäß nur bei Betrieb der Brennkraftmaschine möglich. Demgemäß wäre es theoretisch erforderlich, die Beladungskapazität des Kraftstoffdampffilters entsprechend zu erhöhen, was einhergeht mit größerem Bauvolumen. Dies ist normalerweise nicht wünschenswert. Alternativ hierzu ist es möglich, das Dampfdruckgefälle im Kraftstoffbehälter zu verringern, sodass der Kraftstoff weniger dazu tendiert, von der flüssigen Phase in die Gasphase überzugehen. Dies wird beispielsweise dadurch erreicht, dass der Kraftstoffbehälter als Druckbehälter ausgebildet ist, dass heißt bei einem bestimmten Differenzdruck bezogen auf den Umgebungsdruck hermetisch abgeschlossen ist. Dies bedingt, dass der Kraftstoffbehälter größeren Belastungen standhalten muss, zumal die Steifigkeit von Kunststoffbehältern auch von der Umgebungstemperatur abhängt und es unter Umständen nicht ausgeschlossen ist, dass ein Kraftstoffbehälter eines Kfz höheren Umgebungstemperaturen ausgesetzt ist.

Aus der gattungsbildenden DE 201 10 549 U1 ist ein doppelwandiger Kraftstoffbehälter aus Kunststoff bekannt, der aus wenigstens zwei miteinander stoffschlüssig verbundenen, schalenförmigen Elementen zusammengesetzt ist, wobei die schalenförmigen Elemente jeweils als doppelwandige Blasformteile ausgebildet sind, die jeweils zumindest bereichsweise mehrschichtig co-extrudiert sind und zwischen deren Wandungen jeweils zumindest bereichsweise ein Spalt freigehalten ist. Durchgänge, Unterteilungen und sonstige Konturen in der Behälterwandung werden durch Verschweißung übereinanderliegend angeordneter Wandungsbereiche, sogenannte Wand-zu-Wand-Verschweißungen, der Schalen erzielt. Diese Anordnung besitzt Vorteile hinsichtlich der Stabilität des Behälters, die Herstellung des beschriebenen Kraftstoffbehälters ist allerdings verhältnismäßig aufwendig.

Aus der US 2006/0032538 A1 ist ein Kraftstoffbehälter bekannt, der Schwallwandelemente umfasst, die innerhalb des Behälters mit Abstand zu einer oberen Behälterwandung montiert sind und bereichsweise mit der Behälterwand verschweißt sind.

Aus der DE 10 2007 026 817 B3 ist ein Kraftstoffbehälter für Kraftfahrzeuge aus thermoplastischem Kunststoff als Satteltank mit zwei nebeneinander angeordneten Hauptvolumina bekannt, die über eine im Querschnitt etwa U-förmige Einschnürung der Behälterwandung miteinander kommunizieren, wobei der Kraftstoffbehälter wenigstens ein Versteifungselement aufweist, das in der Einschnürung der Behälterwandung angeordnet ist, wobei das Versteifungselement mehrere mit Abstand zueinander angeordnete, metallene, dem Querschnitt der Einschnürung angepasste Versteifungsbügel oder ein dem Querschnitt der Einschnürung angepasstes tunnelförmiges Versteifungsblech umfasst.

Ein anderer Kraftstoffbehälter mit inneren Verstärkungsstrukturen ist beispielsweise aus der US 5,129,544 bekannt.

Der Erfindung liegt die Aufgabe zugrunde, einen Kraftstoffbehälter der eingangs genannten Art gezielt im Hinblick auf die Biegesteifigkeit bestimmter Wandbereiche zu verbessern.

Die Aufgabe wird gelöst durch die Merkmale des Anspruchs 1, vorteilhafte Ausgestaltungen ergeben sich aus den Unteransprüchen.

Die Aufgabe wird gelöst durch einen Kunststoff-Kraftstoffbehälter gemäß Anspruch 1.

Hierdurch ist es möglich, den Kunststoff-Kraftstoffbehälter sowohl von außen als auch von innen partiell so zu verstärken, dass dessen Biegesteifigkeit erhöht wird, ohne das Fassungsvolumen zu beeinträchtigen. Solche Verstärkungslagen könnten sowohl außen als auch innen an der Behälterwandung vorgesehen sein. Besonders vorteilhaft ist, dass solche Verstärkungslagen gezielt an besonders hochbelasteten Stellen des Kraftstoffbehälters vorgesehen sein können.

Bei einer bevorzugten Variante des Kunststoff-Kraftstoffbehälters nach der Erfindung ist vorgesehen, dass als Verstärkungslagen Platten oder Streifen aus thermoplastischem Kunststoff vorgesehen sind, die sich etwa parallel zu der zu verstärkenden Behälterwandung erstrecken. Solche Platten oder Streifen können in etwa entsprechend der Kontur des Kraftstoffbehälters in den zu verstärkenden Bereichen ausgebildet sein.

Durch solche Verstärkungslagen, die mit Abstand an bestimmten Punkten mit der Behälterwandung verbunden sind, wird die Biegesteifigkeit der Behälterwandung nach dem Funktionsprinzip der Wellpappe verstärkt.

Bei der Ausgestaltung des Kunststoff-Kraftstoffbehälters nach der Erfindung ist vorgesehen, dass als Zwischenlage ein gewelltes Flächengebilde aus thermoplastischem Kunststoff vorgesehen ist, dessen Scheitel jeweils mit der Behälterwandung und mit der Verstärkungslage verschweißt und/oder verklebt sind.

Unter einem flächigen Erzeugnis oder unter einem Flächengebilde im Sinne der Erfindung sind im Wesentlichen flache, plattenförmige Elemente zu verstehen.

Bei einer zweckmäßigen Variante des Kunststoff-Kraftstoffbehälters gemäß der Erfindung kann vorgesehen sein, dass die Verstärkungslage mit Durchbrüchen versehen ist. Diese Durchbrüche können der Montage von in dem Kraftstoffbehälter zu fixierenden Bauteilen dienen. Die Durchbrüche an und für sich besitzen den Vorzug, dass sie die Schwapp- und Prallenergie des durch Fahrdynamik bewegten Kraftstoffs aufzehren und damit als Schwapp- und Schwall-Hemmelemente wirken.

Andererseits kann auch der Zwischenraum zwischen den Verstärkungslagen und der Behälterwandung Kraftstoff durchflutbar bzw. Kraftstoff durchfließbar ausgebildet sein. Es ist selbstverständlich, dass diese Wirkungen nur erzielt werden, wenn die Verstärkungslagen im Innern des Kraftstoffbehälters angeordnet sind. Grundsätzlich ist es möglich, die Verstärkungslagen innen und/oder außen an der Behälterwandung vorzusehen.

Zweckmäßigerweise ist der Kunststoff-Kraftstoffbehälter nach der Erfindung so ausgebildet, dass dieser Mittel zur Betriebsentlüftung und zur Betankungsentlüftung aufweist, wobei eine Betriebsentlüftungseinrichtung wenigstens ein Betriebsentlüftungsventil mit Druckhalterfunktion umfasst, mit welchem das Volumen des Kraftstoffbehälters in einem vorgegebenen Differenzdruckbereich zum Umgebungsdruck gehalten werden kann.

Mehrere Ausführungsbeispiele der Erfindung werden nachstehend unter Bezugnahme auf die beigefügten Zeichnungen erläutert.

Es zeigen:
- Figur 1: eine schematische Darstellung eines Kunststoff-Kraftstoffbehälters im Schnitt, der nicht part der Erfindung ist.
- Figur 2: eine vergrößerte Darstellung des Details II in Figur 1,
- Figur 3: eine Schnittansicht entlang der Linien III-III in Figur 2,
- Figur 4: eine Ausführungsform der Befestigung der Verstärkungslage an der Behälterwandung, gemäß der Erfindung
- Figur 5: eine weitere alternative Ausgestaltung gemäß der Erfindung einer an der Behälterwandung vorgesehenen Verstärkungslage und
- Figur 6: eine dritte Variante der erfindungsgemäß an der Behälterwandung vorgesehenen Verstärkungslage.

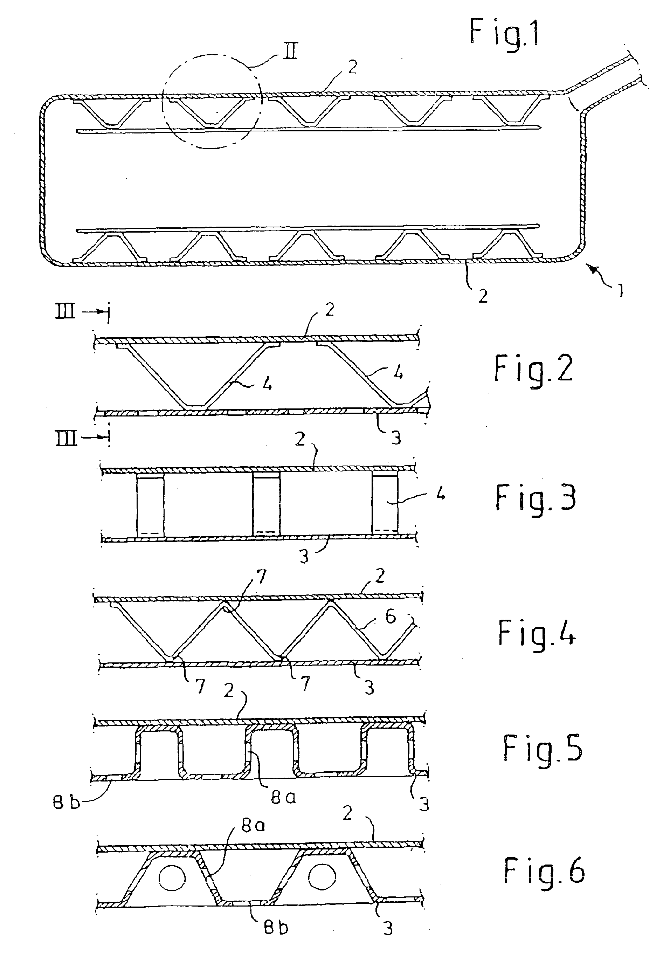

Figur 1 zeigt einen Kunststoff-Kraftstoffbehälter 1 in einer stark vereinfachten Schnittansicht, wobei die Größenverhältnisse in Figur 1 übertrieben unmaßstäblich dargestellt sind.

Der Kunststoff-Kraftstoffbehälter 1 ist zweckmäßigerweise als extrusionsblasgeformter Kunststoff-Kraftstoffbehälter ausgebildet, der durch Extrusionsblasformen von bahn- oder lapperiförmigen Vorformlingen erhalten wurde. Diese bahn- oder lappenförmigen Vorformlinge wurden mehrstufig in einem dreiteiligen Blasformwerkzeug zu einem geschlossenen, einteiligen Kunststoff-Behälter umgeformt.

Während der Herstellung eines solchen Kunststoff-Kraftstoffbehälters bietet sich grundsätzlich die Möglichkeit, verhältnismäßig einfach Einbauteile und Anbauteile während der Ausformung der die spätere Kontur des Kraftstoffbehälters definierenden Halbschalen an deren Innenwandung Einbauteile und/oder Anbauteile zu platzieren.

Der in der Zeichnung dargestellte Kunststoff-Kraftstoffbehälter 1 ist auch hinsichtlich seiner Kontur stark vereinfacht dargestellt. Dem Fachmann wird geläufig sein, dass ein solcher Kunststoff-Kraftstoffbehälter 1 eine durchaus komplexe Kontur mit mehreren miteinander kommunzierenden Teilvolumina aufweisen kann.

Zur partiellen Verstärkung der Behälterwandung 2 sind bei den beschriebenen Ausführungsbeispielen innerhalb des von der Behälterwandung 2 umschlossenen Volumens zwei Verstärkungslagen 3 an der Behälterwandung 2 befestigt, und zwar mit Abstand zu der Behälterwandung 2, wie nachstehend noch im Einzelnen erläutert wird. Der Abstand der Verstärkungslagen 3 zu der Behälterwandung 2 ist übertrieben groß dargestellt. Die Verstärkungslagen 3 sind bei der in Figur 1 gezeigten Variante des Kunststoff-Kraftstoffbehälters so dargestellt, dass sie sich über im Wesentlichen die gesamte Unterseite und Oberseite des Behälters erstrecken. Die Erfindung ist allerdings so zu verstehen, dass diese Verstärkungslagen platten- oder streifenförmig ausgebildet sein können und nur an bestimmten verstärkungsbedürftigen Stellen des Kunststoff-Kraftstoffbehälters vorgesehen sein können. Diese Verstärkungslagen 3 können unmittelbar auf die Behälterwandung 2 des Kunststoff-Kraftstoffbehälters 1 aufgebracht worden sein. Bei den beschriebenen Ausführungsbeispielen sind diese jedoch mit Abstand zu der Behälterwandung 2 angeordnet, und zwar so, dass diese nur punktuell mit der Behälterwandung 2 in Berührung sind, derart, dass insgesamt die Biegesteifigkeit der Behälterwandung 2 in dem betreffenden Bereich signifikant erhöht wird.

Bei dem in den Figuren 1 bis 3 dargestellten Ausführungsbeispiel sind zwischen der Verstärkungslage 3 und der Behälterwandung 2 V-förmige Profile 4 vorgesehen, die untereinander nicht verbunden sind und dem Zwischenraum 5 zwischen den Verstärkungslagen 3 und der Behälterwandung 2 eine wabenförmige, Kraftstoff durchflutbare Struktur geben. Die Profile 4 können verhältnismäßig elastischer als die Verstärkungslage 3 sein. Der Zwischenraum 5 kommuniziert mit dem übrigen Behältervolumen derart, dass die Anordnung zusätzlich als Schwapp- bzw. Schwall-Hemmelement innerhalb des Kunststoff-Kraftstoffbehälters 1 wirkt. Die sich öffnenden Seiten der etwa V-förmig ausgestalteten Profile 4 sind im Inneren der Behälterwandung 2 zugekehrt. Diese sind so angeordnet, dass mechanisch eine Art "Wellpappen-Effekt" erzeugt wird.

Eine alternative Ausgestaltung der Kunststoff-Kraftstoffbehälters ist in Figur 4 dargestellt. Dort ist zwischen der Verstärkungslage 3 und der Behälterwandung 2 eine gewellte Zwischenlage 6 angeordnet, die ebenfalls aus thermoplastischem Kunststoff besteht, wobei die Scheitel 7 der Wellenstruktur jeweils mit der Behälterwandung 2 und der Verstärkungslage 3 verschweißt sind. Die Zwischenlage 6 besitzt relativ zu der Behälterwandung 2 und der Verstärkungslage 3 eine geringere Biegesteifigkeit, wodurch die Biegesteifigkeit der Behälterwandung 2 insgesamt in eine Biegerichtung erhöht wird, in eine Richtung quer hierzu jedoch unverändert bleibt.

Durch gezielte Ausrichtung der in Figur 4 gezeigten Struktur an bestimmten Stellen der Behälterwandung lässt sich so eine gerichtete Erhöhung der Biegesteifigkeit erzielen.

Eine weitere Ausgestaltung des Kunststoff Kraftstoffbehälters 1 gemäß der Erfindung ist in Figur 5 dargestellt. Dort ist die Verstärkungslage 3 unmittelbar als geripptes Profil ausgebildet und linienförmig mit der Behälterwandung 2 verschweißt. Alternativ können anstelle von sich längs oder quer erstreckenden Rippen auch einzelne domförmige Erhebungen der Verstärkungslage 3 mit der Behälterwandung 2 verschweißt sein.

In einer weiteren, nicht dargestellten Variante des Kunststoff-Kraftstoffbehälters 1 gemäß der Erfindung kann beispielsweise die Zwischenlage 6 ein Querschnittsprofil entsprechend demjenigen in Figur 5 aufweisen.

In Figur 5 ist eine gerippte Verstärkungslage 3 dargestellt, die mit Durchbrüchen 8a, 8b versehen ist. Die Durchbrüche 8a erstrecken sich etwa quer zur Behälterwandung 2 und dienen als Durchlässe für Kraftstoff, und zwar in erster Linie um die Schwallenergie des diese überflutenden Kraftstoffs abzubauen. Die Durchbrüche 8b, die sich etwa parallel zur Behälterwandung erstrecken, sind selbstverständlich ebenfalls Kraftstoff durchflutbar, diese können jedoch der Montage von in dem Kunststoff-Kraftstoffbehälter 1 vorzusehenden Einbauten dienen.

Figur 6 zeigt schließlich eine weitere Variante der Ausbildung einer Verstärkungslage 3, die entweder Längs- oder Querrippen mit einem Trapezprofil aufweisen kann oder mit entsprechenden domförmigen Vorsprüngen oder Erhebungen versehen sein kann. Diese können ebenfalls mit Durchbrüchen 8a, 8b versehen sein.

Alternativ ist es möglich, eine Verstärkungslage 3 als in etwa ebene, flächige Struktur an diskreten Punkten thermisch mit der Behälterwandung zu vernieten und/oder zu verschweißen. Auch kann die Verstärkungslage 3 mit warzenförmigen Vorsprüngen versehen sein, die bei der Ausformung des Kunststoff-Kraftstoffbehälters mit der Behälterwandung 2 verschweißt werden. Bei einer Anbringung der Verstärkungslagen 3 auf die Außenseite des Kunststoff-Kraftstoffbehälters 1 können die Verstärkungslagen in der zweiten Hitze, beispielsweise durch Spiegelschweißen, Reibschweißen oder dergleichen mit der Behälterwandung 2 verbunden worden sein. Alternativ ist die Anwendung eines Haftvermittlers denkbar.

### Bezugszeichenliste

- 1: Kunststoff-Kraftstoffbehälter
- 2: Behälterwandung
- 3: Verstärkungslagen
- 4: Profile
- 5: Zwischenraum
- 6: Zwischenlage
- 7: Scheitel
- 8a,8b: Durchbrüche

## Patentansprüche

1. Kunststoff-Kraftstoffbehälter (1) für Kraftfahrzeuge mit wenigstens einer, wenigstens ein Kraftstoffvolumen umschließenden Behälterwandung, wobei die Behälterwandung zumindest bereichsweise mit Mitteln zur Erhöhung der Biegesteifigkeit in Form von stoff- und/oder formschlüssig mit dieser verbundenen, flächigen Verstärkungslagen versehen ist, **dadurch gekennzeichnet, dass** wenigstens eine Verstärkungslage (3) über eine Zwischenlage (6) mit der Behälterwandung verbunden ist und wobei als Zwischenlage (6) ein gewelltes Flächengebilde aus thermoplastischem Kunststoff vorgesehen ist, dessen Scheitel (7) jeweils mit der Behälterwandung (2) und mit der Verstärkungslage (3) verschweißt und/oder verklebt sind.

2. Kunststoff-Kraftstoffbehälter nach Anspruch 1, **dadurch gekennzeichnet, dass** als Verstärkungslagen (3) Platten und/oder Streifen aus thermoplastischem Kunststoff vorgesehen sind, die sich etwa parallel zu der zu verstärkenden Behälterwandung (2) erstrecken.

3. Kunststoff-Kraftstoffbehälter nach einem der Ansprüche 1 bis 2, **dadurch gekennzeichnet, dass** die Verstärkungslage (3) mit Durchbrüchen (8a, 8b) versehen ist.

4. Kunststoff-Kraftstoffbehälter nach einem der Ansprüche 1 bis 3, **dadurch gekennzeichnet, dass** wenigstens eine Verstärkungslage (3) innen und/oder außen an der Behälterwandung (2) vorgesehen ist.

5. Kunststoff-Kraftstoffbehälter nach einem der Ansprüche 1 bis 5, **dadurch gekennzeichnet, dass** dieser Mittel zur Betriebsentlüftung und zur Betankungsentlüftung aufweist, wobei eine Betriebsentlüftungseinrichtung wenigstens ein Betriebsentlüftungsventil mit Druckhaltefunktion umfasst, mit welchem das Volumen des Kunststoff-Kraftstoffbehälters (1) in einem vorgegebenen Differenzdruckbereich zum Umgebungsdruck gehalten werden kann.

## Claims

1. A plastic fuel tank (1) for motor vehicles having at least one tank wall surrounding at least one fuel volume, wherein the tank wall is provided at least in certain areas with means for increasing the flexural rigidity in the form of two-dimensionally extended reinforcing layers connected materially and/or positively thereto, **characterized in that** at least one reinforcing layer (3) is connected with the tank wall via an intermediate layer (6) and wherein a corrugated sheeting material of thermoplastic plastic is provided as intermediate layer (6), the peaks (7) of which are respectively welded and/or bonded with the tank wall (2) and with the reinforcing layer (3).

2. The plastic fuel tank according to Claim 1, **characterized in that** plates and/or strips of thermoplastic plastic are provided as reinforcing layers (3), which extend approximately parallel to the tank wall (2) which is to be reinforced.

3. The plastic fuel tank according to one of Claims 1 to 2, **characterized in that** the reinforcing layer (3) is provided with apertures (8a, 8b).

4. The plastic fuel tank according to one of Claims 1 to 3, **characterized in that** at least one reinforcing layer (3) is provided internally and/or externally on the tank wall (2).

5. The plastic fuel tank according to one of Claims 1 to 4, **characterized in that** it has means for operational venting and for refuelling venting, wherein a device for operational venting comprises at least one operational venting valve with a pressure holding function, by which the volume of the plastic fuel tank (1) can be kept in a predetermined differential pressure range with respect to the ambient pressure.

## Revendications

1. Réservoir de carburant (1) en matière plastique pour véhicules à moteur, comportant au moins une paroi de réservoir, qui entoure an moins un volume de carburant, la paroi du réservoir étant, au moins par zones, pourvue de moyens pour augmenter la rigidité en flexion, sous forme de couches de renforcement bidimensionnelles, liées à cette paroi d'une manière ferme et/ou avec correspondance de forme, **caractérisé en ce qu'**au moins une couche de renforcement (3) est par l'intermédiaire d'une couche intermédiaire (6) liée à la paroi du réservoir, une structure bidimensionnelle ondulée, en un matériau thermoplastique, étant prévue en tant que couche intermédiaire (6), structure dont chaque crête (7) est soudée et/ou collée à la paroi (2) du réservoir et à la couche de renforcement (3).

2. Réservoir de carburant en matière plastique selon la revendication 1, **caractérisé en ce que**, en tant que couches de renforcement (3), des plaques et/ou des bandes en une matière plastique thermoplastique sont prévues, qui s'étendent d'une manière approximativement parallèle à la paroi (2) du réservoir à renforcer.

3. Réservoir de carburant en matière plastique selon l'une des revendications 1 à 2, **caractérisé en ce que** la couche de renforcement (3) est pourvue de traversées (8a, 8b).

4. Réservoir de carburant en matière plastique selon l'une des revendications 1 à 3, **caractérisé en ce qu'**au moins une couche de renforcement (3) est prévue à l'intérieur et/ou à l'extérieur de la paroi (2) du réservoir.

5. Réservoir de carburant en matière plastique selon l'une des revendications 1 à 5, **caractérisé en ce qu'**il comprend des moyens pour une mise à l'air libre en cours d'utilisation ou lors du remplissage, un dispositif de mise à l'air libre en cours d'utilisation comprenant au moins une vanne de mise à l'air libre en cours d'utilisation, ayant une fonction de maintien sous pression, à l'aide de laquelle il est possible de maintenir le volume du réservoir du carburant en matière plastique (1) dans une plage prédéfinie de pression différentielle par rapport à la pression ambiante.
